# EUROPÄISCHE PATENTSCHRIFT

(11) **EP 0 582 066 B1**
(45) Veröffentlichungstag und Bekanntmachung des Hinweises auf die Patenterteilung: **04.02.1998**
(21) Anmeldenummer: 93109270.4
(22) Anmeldetag: 09.06.1993
(51) Int. Cl.: B01D 46/44, B01D 46/24, B01D 46/04

(54) **Verfahren zur Ueberwachung von Filterelemente**
Process for monitoring filter elements
Procédé de surveillance pour éléments de filtrage

(30) Priorität: 07.08.1992 DE 4226145
(43) Veröffentlichungstag der Anmeldung: 09.02.1994
(73) Patentinhaber: Deutsche Babcock Energie- und Umwelttechnik Aktiengesellschaft, 46049 Oberhausen (DE)
(72) Erfinder: Jelich, Werner, D-44803 Bochum (DE); Rehwinkel, Heiko, Dr., D-4250 Bottrop (DE); Klauke, Friedrich, Dr., D-4030 Ratingen 1 (DE); König, Dieter, Dr., D-4324 Hattingen (DE); Kalthoff, Udo, Dr., D-4330 Mülheim/Ruhr (DE)
(74) Vertreter: Müller, Jürgen, Dipl.-Ing.

(56) Entgegenhaltungen:
- EP-A- 0 433 637
- US-A- 3 865 561
- US-A- 4 500 326
- US-A- 4 786 293

## Beschreibung

Die Erfindung betrifft ein Verfahren zur Überwachung von hohlen, zum Filtern von heißen, staubbeladenen Gasen dienenden Filterelementen nach dem Oberbegriff des Patentanspruches 1.

Aus der DE-PS 35 15 365 ist ein Heißgasfilter bekannt, bei dem Filterkerzen in einer Lochplatte aufgehängt sind, die das Filtergehäuse in einen Rohgasraum und einen Reingasraum aufteilt. Wenn bei einem solchen Heißgasfilter eine der Filterkerzen durch Bruch defekt wird, gelangt ungereinigtes Rohgas in das Reingas. Um unzulässig hohe Staub- und Schadstoffkonzentrationen im Reingas zu vermeiden, muß das gesamte Heißgasfilter stillgesetzt und die defekte Filterkerze ausgetauscht werden. Das führt zu unnötigen Produktionsausfällen.

Aus der DE-OS 39 38 264 und der EP-OS 04 33 637 ist es bekannt, die Filterkerzen innerhalb des Filtergehäuses gruppen- oder reihenweise einzelnen das Reingas führenden Sammelkanälen zuzuordnen. Diese Sammelkanäle, auf denen die keramischen Filterkerzen ruhen oder unter denen die Filterkerzen angeordnet sind, sind über den Querschnitt des Filtergehäuses verteilt und in einer oder mehreren Ebenen übereinander angeordnet. Die Sammelkanäle sind innerhalb oder außerhalb des Filtergehäuses mit Reingasleitungen verbunden. Auch bei diesen Heißgasfiltern ist keine Möglichkeit vorgesehen, um einem Störfall durch Bruch einer Filterkerze zu begegnen.

Zur Abreinigung der keramischen Filterkerzen innerhalb des Filtergehäuses des bekannten Heißgasfilters (EP-OS 04 33 637) wird in die Reingasleitung entgegen der Strömungsrichtung des Reingases ein Druckgas impulsartig eingeblasen. In diesem Zusammenhang ist weiterhin bekannt (US-PS 45 00 926), den Druck des Rohgases und des Reingases zu messen und daraus die sich über die Filterkerzen einstellende Druckdifferenz zu bestimmen. Überschreitet der aus diesen Meßwerten gebildete Wert einen vorgegebenen Betrag, so wird der Reinigungsimpuls für eine bestimmte Gruppe von Filterelementen ausgelöst. Während des Abreinigungsvorganges wird die betreffende Gruppe von Filterelemente von der Rohgaszufuhr abgesperrt. Bei einem anderen bekannten Verfahren (WO 88/07404) wird die den Abreinigungsvorgang auslösende Druckdifferenz durch eine Messung des Volumenstromes in der Reingassammelleitung überlagert. Auch diese Verfahren lassen keine Rückschlüsse auf den Zustand einer individuellen Gruppe von Filterelemente zu, weil der Druck und der Volumenstrom des Reingases in dem aus dem Filtergehäuse abgeführten Reingas insgesamt bestimmt werden.

In der WO 87/07179 ist eine Filtervorrichtung beschrieben, bei der die Filterkerzen an einer Lochplatte aufgehängt sind. Jede dieser Filterkerzen wird einzeln über eine der Mündung der Filterkerze gegenüber stehende Abreinigungslanze abgereinigt und über eine Messung des Staudrucks des Reingases einzeln überwacht. Für die Staudruckmessung werden die Abreinigungslanzen verwendet, wobei im Augenblick der Staudruckmessung die betreffende Abreinigungslanze abgeschaltet ist. Diese direkte Messung scheidet bei Filtervorrichtungen aus, bei denen die Filterelemente aufgrund der großen unterzubringenden Filterfläche gruppenweise zusammengefaßt und die Verbindungsleitungen von den Gruppen der Filterkerzen zu der Reingasleitung nicht von außen zugänglich sind. Das gleiche gilt für das aus der US-A-3 865 561 bekannte Luftfilter, bei dem jedes einzelne Filterelement während des Filterbetriebes überwacht wird und zwar durch eine Messung des Staubgehaltes des Reingases. Hier ist ein überhöhter Staubgehalt ein Indiz für einen Defekt des Filterelementes. Nach Überschreiten eines vorgegebenen Wertes wird das betreffende Filterelement von der Zufuhr der staubbeladenen Luft herausgenommen.

Zur Überwachung eines Luftfilters ist es weiterhin bekannt (US-A-4 786 293), während des Filterbetriebes die Druckdifferenz zwischen der Rohgasseite und der Reingasseite zu messen.

Wenn die Druckdifferenz gleich oder größer einem Referenzwert ist, wird der Vorgang der Abreinigung der Filterelemente eingeleitet, bei dem alle Filterelemente gleichzeitig abgereinigt werden. Nach der Abreinigung wird der Referenzwert neu festgelegt.

In der US-A-4 500 326 ist ein mit mehreren Filterkammern versehenes Filter beschrieben, bei dem der Druck vor und hinter den Filterkammern gemessen wird. Die erste Filterkammer dieses Filters wird abgereinigt, wenn ein vorgegebener Wert der Differenz der beiden Drücke erreicht ist. Sobald der Vergleichswert erneut überschritten wird, wird die nächste Filterkammer abgereinigt. Wegen der Bestimmung des Druckverlustes über das gesamte Filter und der vorgegebenen Abfolge der Abreinigung kann der Zustand einer bestimmten Filterkammer nicht überwacht werden.

Der Erfindung liegt die Aufgabe zugrunde, das gattungsgemäße Verfahren so zu gestalten, daß ein Schaden an einem Filterelement lokalisiert und der Eintritt von Rohgas in das Reingas vermieden werden kann.

Diese Aufgabe wird bei einer gattungsgemäßen Vorrichtung erfindungsgemäß durch die kennzeichnenden Merkmale des Patentanspruches 1 gelöst. Vorteilhafte Ausgestaltungen der Erfindung sind Gegenstand der Unteransprüche.

Die Erfindung geht von dem Grundgedanken aus, daß sich jeder Abreinigungsvorgang in einer Änderung auf der Reingasseite bemerkbar macht, z. B. in einer kurzfristigen Druckänderung oder einer Änderung des Staubgehaltes. Diesen Effekt nutzt die Erfindung aus, indem die Änderung der Reingasseite mit dem Abreinigungszyklus verknüpft wird. Ist bekannt, welche Filterelementengruppe gerade abgereinigt wird, so kann man die gemessene Änderung dieser einen Filterelementengruppe zuordnen und so eine Aussage über den Zustand deren Filterelemente machen. Ein solches Verfahren ist überall dort von Vorteil, wo eine direkte Messung in dem einer Filterelementengruppe zugeordneten Leitungssystem wegen zu hoher Temperaturen oder einer Unzugänglichkeit der Leitung nicht möglich ist.

Mehrere Ausführungsbeispiele der Erfindung werden im folgenden an der Zeichnung näher erläutert. Es zeigen:

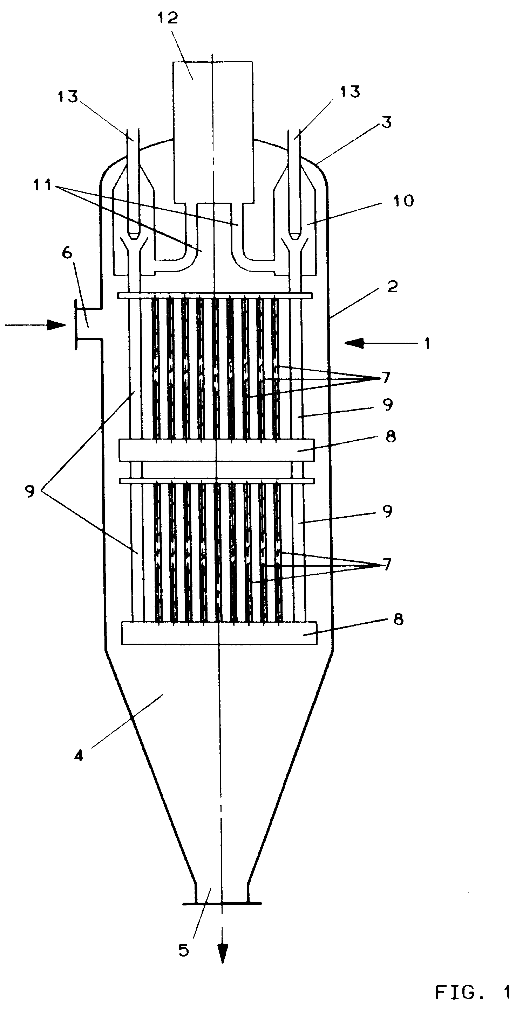

Fig. 1 schematisch einen Längsschnitt durch eine Vorrichtung zum Filtern von Gasen und

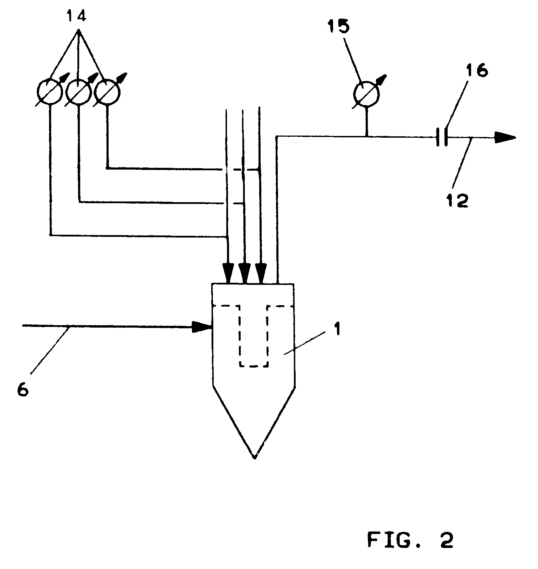

Fig. 2 ein Überwachungsschema.

Die Vorrichtung zum Filtern von vorzugsweise heißen, staubbeladenen, unter Druck stehenden Gasen besteht aus einem Filtergehäuse 1 mit einem zylindrischen Mantel 2, einem gewölbten Deckel 3 und mit einem Trichter 4 im unteren Teil. Der Trichter 4 geht in einen Auslaßstutzen 5 über und dient zum Sammeln des abgeschiedenen Staubes. Das Filtergehäuse 1 ist mit einem Zuführungsstutzen 6 für das zu reinigende Rohgas versehen.

Innerhalb des Filtergehäuses 1 sind hohle Filterelemente angeordnet, die derart mit das Reingas führenden Sammelkanälen 8 verbunden sind, daß die Innenräume der Filterelemente mit dem Innenraum eines Sammelkanales 8 in Verbindung stehen. Als Filterelemente kommen Filterschläuche oder keramische als einseitig geschlossene Hohlkörper ausgebildete Filterkerzen 7 zur Anwendung. Jeder Sammelkanal 8 nimmt eine Gruppe von Filterkerzen 7 auf, die über entsprechend geformte Mundstücke auf dem Sammelkanal 8 aufstehen, oder unterhalb des Sammelkanals 8 aufgehängt sind. Die Sammelkanäle 8 sind in einer oder mehreren Ebenen übereinander und nebeneinander angeordnet. Die Sammelkanäle 8 können z. B. auf einem an dem Mantel 2 des Filtergehäuses 1 abgestützten Tragring aufliegen oder oberhalb der Filterkerzen 7 in dem Filtergehäuse 1 aufgehängt sein.

Jeder Sammelkanal 8 ist mit einer Abführungsleitung 9 verbunden, die an einen Sammler 10 angeschlossen sind. Ein oder mehrere solcher Sammler 10 sind innerhalb der Filtergehäuses 1 angeordnet und über Verbindungsleitungen 11 mit einer Reingasleitung 12 verbunden, die durch den Deckel 3 des Filtergehäuses 1 hindurchgeführt ist.

Koaxial zu jeder Zuführungsleitung 9 ist eine Abreinigungslanze 13 angeordnet. Die Abreinigungslanze 13 ist durch den Deckel 3 des Filtergehäuses 1 in den Sammler 10 hineingeführt und endet in einem vertikalen Abstand von der Einmündung der Zuführungsleitung 9. Durch diese Abreinigungslanze 13 wird ein gasförmiges Abreinigungsmedium in den Sammelkanal 8 mit einem vorgegebenen, den Rohgasdruck übersteigenden Druck eingeführt. Durch Zuführung des Abreinigungsmediums in den Innenraum der Filterkerzen 7 wird der Filterkuchen, der sich auf der Außenseite der Filterkerzen 7 gebildet hat, entfernt.

Die Abreinigung der Filterkerzen 7 erfolgt intervallweise nach einem vorgegebenen Zyklus, wobei jede Gruppe von Filterkerzen einmal in jedem Zyklus abgereinigt wird. Jeder Abreinigungsvorgang macht sich in einer kurzfristigen Druckänderung bemerkbar. Diese Druckänderung kann von einem in der Abreinigungslanze 13 angeordneten Druckmesser 14 erfaßt werden. Im Falle einer verstopften Filterkerze 7 würde der Druckimpuls über einen Standardwert hinaus ansteigen. Eine gebrochene Filterkerze 7 erzeugt einen geringeren Druckimpuls als normal. Eine Änderung des Druckimpulses ist somit ein Indiz für eine defekte Filterkerzengruppe. Entsprechend dem Abreinigungszyklus kann somit eine defekte Filterkerzengruppe genau lokalisiert und ein Warnsignal ausgelöst werden.

Entsprechend der Schadensindikation wird die Abreinigung der defekten Filterkerzengruppe außer Betrieb genommen. Bei einer Abreinigung würde sich die Bruchstelle der Filterkerze aufgrund der Reinigungsimpulses öffnen, und es würde Staub in den Reingasraum gelangen. Bei abgestellter Abreinigung verschließt sich die Bruchstelle mit Staub, und es tritt ein Sanierungseffekt ein, der durch das auf der Filterkerze ruhende Gegengewicht verstärkt wird.

Anstelle des Druckimpulses können zur Schadensindikation auch andere Zustandsgrößen des Reingases herangezogen und in der beschriebenen Weise mit dem Abreinigungszyklus gekoppelt werden. Hierzu kommen der Druck, der Staubgehalt und der Staudruck des Reingases in Betracht. Der Staubgehalt wird über ein Staubmeßgerät 16 und der Druck wird über einen Druckmesser 15 bestimmt, die beide in der Reingasleitung 12 angeordnet sind. Die Messung des Staudruckes des Reingases erfolgt über die Druckentnahme 14 in den Abreinigungslanzen 13.

Für die Überwachung der Filterkerzengruppen reicht die Registrierung des Abreinigungszyklus und der Vergleich entweder mit dem Druckimpuls, dem Staubgehalt oder dem Staudruck aus. Soll eine darüber noch hinausgehende Sicherheit angestrebt werden, so können sowohl der Druckimpuls als auch der Staubgehalt und der Staudruck bestimmt werden. Dabei sind die entsprechenden Meßeinrichtungen über eine Auswahlschaltung miteinander verknüpft, deren Signal mit dem Abreinigungszyklus verglichen wird.

## Patentansprüche

1. Verfahren zur Überwachung von hohlen, zum Filtern von heißen, staubbeladenen Gasen dienenden Filterelementen, die gruppenweise in einem Filtergehäuse angeordnet und gruppenweise über jeweils eine Abführungsleitung mit einer Reingasleitung zur Abführung des Reingases verbunden sind, wobei ein Reinigungsmedium erhöhten Druckes zyklusweise in jeweils eine Abführungsleitung geblasen wird,
- dadurch gekennzeichnet, daß innerhalb eines Reinigungszyklus jede Gruppe von Filterelementen nach einer festgelegten Reihenfolge einmal abgereinigt wird,
- daß während der Abreinigung einer jeden Gruppe von Filterelementen der Zustand des Gases im Reinigungsmediumstrom und/oder Reingasstrom gemessen wird,
- daß die Meßergebnisse eines gesamten Reinigungszyklus aufgezeichnet werden
- und daß das Meßergebnis der gerade abgereinigten Gruppe von Filterelementen mit einem vorgegebenen Standardwert verglichen und bei einer Abweichung ein Warnsignal für diese Gruppe von Filterelementen ausgelöst wird.

2. Verfahren nach Anspruch 1, dadurch gekennzeichnet, daß die maximalen Anzeigewerte der einzelnen Reinigungsimpulse in jeder Abreinigungslanze innerhalb eines Reinigungszyklus aufgezeichnet und mit dem Standardwert verglichen werden.

3. Verfahren nach Anspruch 1, dadurch gekennzeichnet, daß der Staubgehalt, und/oder der Druckimpuls des Reingases in der Reingasleitung gemessen, mit dem Reinigungszyklus in Beziehung gebracht und der gerade abgereinigten Gruppe von Filterelemente zugeordnet werden.

4. Verfahren nach einem der Ansprüche 1 bis 3, dadurch gekennzeichnet, daß bei einer Abweichung von einem vorgegebenen Sollwert die betreffende Gruppe von Filterelemente von der Abreinigung ausgenommen wird.

5. Verfahren nach einem der Ansprüche 1 bis 4, dadurch gekennzeichnet, daß die Reinigungsimpulse, der Staubgehalt und der Druckimpuls aufgezeichnet und über eine Auswahlschaltung mit der Aufzeichnung des Abreinigungszyklus verglichen werden.

## Claims

1. Method of monitoring hollow filter elements which serve for filtering hot, dust-laden gases and which are arranged in groups in a filter housing and are connected in groups by way of a respective discharge duct with a pure gas duct for discharge of pure gas, wherein a cleaning medium of increased pressure is blown into each discharge duct cyclically, characterised thereby that within a cleaning cycle each group of filter elements is cleaned down once according to a fixed sequence, that during the cleaning down of each group of filter elements the state of the gas in the cleaning medium flow and/or pure gas flow is measured, that the measurement results of a complete cleaning cycle are recorded and that the measurement result of the just cleaned group of filter elements is compared with a predetermined standard value and an alarm signal for this group of filter elements is triggered in the case of a deviation.

2. Method according to claim 1, characterised thereby that the maximum indicated values of the individual cleaning pulses in each cleaning lance within a cleaning cycle are recorded and compared with the standard value.

3. Method according to claim 1, characterised thereby that the dust content and/or the pressure pulse of the pure gas in the pure gas duct is or are measured, brought into relationship with the cleaning cycle and associated with the just cleaned group of filter elements.

4. Method according to one of claims 1 to 3, characterised thereby that in the case of a deviation from a predetermined target value the relevant group of filter elements is taken out of the cleaning.

5. Method according to one of claims 1 to 4, characterised thereby that the cleaning pulse, the dust content and the pressure pulse are recorded and compared with the recording of the cleaning cycle by way of a selector circuit.

## Revendications

1. Procédé de surveillance d'éléments filtrants creux servant au filtrage de gaz chauds, chargés en poussière, disposés par groupes dans un carter de filtre, chaque groupe étant relié par l'intermédiaire d'une conduite d'évacuation, à une conduite de gaz épurée, en vue d'évacuer les gaz épurés, un milieu de nettoyage placé sous pression élevée étant insufflé, selon un cycle, dans chaque conduite d'évacuation, caractérisé
- en ce que, dans les limites d'un cycle de nettoyage, chaque groupe d'éléments filtrants est nettoyé à une reprise, suivant un ordre de succession fixé,
- en ce que, pendant le nettoyage de chaque groupe d'éléments filtrants, l'état du gaz dans le flux de milieu de nettoyage et/ou le flux de gaz épuré est mesuré,
- en ce que les résultats de mesure d'un cycle de nettoyage complet sont affichés,
- et en ce que le résultat des mesures du groupe d'éléments filtrants venant justement d'être nettoyé est comparé à une valeur standard prédéterminée et un signal d'avertissement, destiné à ce groupe d'éléments filtrants, étant déclenché en cas d'existence d'un écart.

2. Procédé selon la revendication 1, caractérisé en ce que les valeurs d'affichage maximales des différentes impulsions de nettoyage dans chaque lance de nettoyage ou ramonage sont enregistrées dans les limites d'un cycle de nettoyage et sont comparées à la valeur standard.

3. Procédé selon la revendication 1, caractérisé en ce que la teneur en poussière et/ou l'impulsion de pression des gaz épurés dans la conduite des gaz épurés sont mesurées, mises en relation avec le cycle de nettoyage et associées au groupe d'éléments filtrants venant justement d'être nettoyé.

4. Procédé selon l'une des revendications 1 à 3, caractérisé en ce qu'en cas d'un écart vis-à-vis d'une valeur de consigne prédéterminée, le groupe d'éléments filtrants concerné est exclu, pour le nettoyage.

5. Procédé selon l'une des revendications 1 à 4, caractérisé en ce que les impulsions de nettoyage, la teneur en poussière et les impulsions de pression sont enregistrées et sont comparées à l'enregistrement du cycle de nettoyage, par l'intermédiaire d'un circuit de sélection.
